# EUROPÄISCHE PATENTSCHRIFT

(11) **EP 1 214 543 B1**
(45) Veröffentlichungstag und Bekanntmachung des Hinweises auf die Patenterteilung: **03.02.2010**
(21) Anmeldenummer: 00956246.3
(22) Anmeldetag: 21.07.2000
(51) Int. Cl.: F16L 13/14

(54) **VERFAHREN ZUR VERBINDUNG EINES PRESSFITTINGS MIT EINEM ROHR SOWIE PRESSFITTING, ROHR UND PRESSGERÄT ZUR DURCHFÜHRUNG DIESES VERFAHRENS**
METHOD FOR JOINING A CRIMPED FITTING AND A PIPE, CRIMPED FITTING, PIPE AND CRIMPING DEVICE FOR CARRYING OUT SAID METHOD
PROCEDE POUR RELIER UN RACCORD A EMMANCHER A LA PRESSE ET UN TUYAU, RACCORD A EMMANCHER A LA PRESSE, ET PRESSE SERVANT A METTRE EN OEUVRE LEDIT PROCEDE

(30) Priorität: 21.09.1999 DE 19945113
(43) Veröffentlichungstag der Anmeldung: 19.06.2002
(60) Teilanmeldung: 04025027.6
(73) Patentinhaber: Novopress GmbH Pressen und Presswerkzeuge & Co. KG, 41460 Neuss (DE)
(72) Erfinder: LOHMANN, Gert, 41468 Neuss (DE)
(74) Vertreter: von Kreisler Selting Werner
(86) Internationale Anmeldenummer: PCT/EP2000/007013
(87) Internationale Veröffentlichungsnummer: WO 2001/021997

(56) Entgegenhaltungen:
- EP-A- 0 879 985
- EP-A- 1 081 421
- CH-A- 682 942
- DE-C- 19 620 165
- DE-C- 19 748 945
- DE-U- 29 908 561
- US-A- 5 690 146
- US-A- 5 824 906

## Beschreibung

Die Erfindung betrifft Verfahren zur Verbindung eines Preßfittings mit einem Rohr mittels eines Preßgeräts, bei dem Preßfitting und Rohr um eine bestimmte Einschubtiefe ineinandergesteckt und dann das Preßfitting und/oder das Rohr mit Hilfe des Preßgeräts derart radial nach innen plastisch verformt wird bzw. werden, daß sich zwischen ihnen eine Preßverbindung ergibt. Die Erfindung bezieht sich ferner auf ein Preßfitting zur Durchführung einer dieser Verfahren.

Zum Verbinden von Rohren ist es bekannt, hülsenförmige Preßfittings zu verwenden, die aus Kunststoff oder Metall bestehen. Zwecks Herstellung der Rohrverbindung werden die Rohrenden und das Preßfitting ineinandergesteckt und radial unter plastischer Verformung zusammengepreßt. Dabei gibt es zwei Arten von Preßfittings, nämlich solche, die in die Rohrenden eingesteckt werden (vgl. CH-A 682942), und solche, die über die Rohrenden geschoben werden. Letztere Rohrverbindungen und die zugehörigen Preßfittings sind beispielsweise aus der DE-C-11 87 870 und der EP-B-0 361 630 bekannt.

Die Verpressung des Preßfittings und des Rohrs geschieht mit Hilfe von Preßgeräten, wie sie in verschiedenen Ausführungsformen beispielsweise aus der DE-C-21 36 782, DE-A-34 23 283, EP-A-0 451 806, EP-B-0 361 630, DE-C-42 40 427 und DE-A-196 31 019 bekannt sind. Die Preßgeräte haben zwei oder mehr Preßbacken, die beim Preßvorgang radial nach innen unter Bildung eines geschlossenen Preßraums bewegt werden können. Als Antrieb zum Bewegen der Preßbacken ist vielfach ein Hydraulikkolben vorgesehen, der über eine handbetriebene oder elektromotorisch angetriebene Pumpe mit Hydraulikdruck beaufschlagt werden kann.

Die Herstellung der vorbeschriebenen Rohrverbindungen geschieht insbesondere zur Installation von wasserführenden, aber auch gasführenden Leitungen in Gebäuden. Dabei müssen eine Vielzahl von Verpressungen durchgeführt werden, und zwar auch an Stellen, wo die Verpressung visuell nicht ausreichend kontrolliert werden kann, weil sie nur schwer zugänglich ist und/oder wenig Licht zur Verfügung steht. Um dennoch eine Überprüfung der Dichtheit der Rohrverbindung durchzuführen, werden die Leitungen mit einer Flüssigkeit gefüllt oder einer Druckprobe unterzogen. Dies hat jedoch bei einer Undichtigkeit zur Folge, daß das verwendete Medium austritt, wodurch erhebliche Schäden entstehen können.

Um den verbindungsbereich zwischen Preßfitting und einem eingesteckten Rohr optisch deutlich erkennbar zu machen, ist nach der EP 1 081 421 A1 (erst am 07.03.2001 veröffentlicht) vorgeschlagen, das Preßfitting mit einer Schicht aus mikroverkapselten Farbstoffen zu versehen. Beim Ansetzen des Preßwerkzeuges an dem Fitting und bei Durchführung des Preßvorgangs werden die Hüllen der mikroverkapselten Farbstoffe, die von dem Preßwerkzeug erfasst werden, gesprengt, so daß der Farbstoff ausfließen kann. Der von den Hüllen befreite Farbstoff zeigt dann deutlich die Durchführung der Verpreßung von Preßfitting und Rohrende an. Der Monteur kann somit schnell kontrollieren, ob in einem Leitungssystem an sämtlichen Stellen Preßfittings mit den darin eingeführten Rohrenden durch Verpreßung und Kaltverformung miteinander verbunden sind.

Daneben ist es durch die DE 299 08 561 U1 bekannt, Rohrenden mit außenseitig aufgebrachten Dichtmanschetten auszurüsten, die unterschiedlich eingefärbte Abschnitte aufweisen. Das Rohrende wird dann nur bis zur Grenze zwischen den beiden Farbabschnitten in das Preßfitting eingeschoben. Auf diese Weise ist optisch erkennbar, ob das Rohrende ausreichend weit in das Preßfitting eingeschoben worden ist. In einer anderen Ausführungsform wird ein Innenfitting verwendet, das außenseitig mit einer Dichtmanschette versehen ist, die in der Mitte einen ringförmigen Farbabschnitt aufweist. Bis zu diesem Farbabschnitt werden dann die Rohrenden auf das Innenfitting aufgeschoben, wobei über den Farbabschnitt optisch erkennbar ist, ob die Rohrenden in ausreichendem Umfang auf das Innenfitting aufgeschoben worden sind.

Der Erfindung liegt die Aufgabe zugrunde, Verfahren zum Verbinden von Preßfittings mit einem Rohr bereitzustellen, nach deren Anwendung deutlich erkennbar ist, ob eine Verpressung durchgeführt worden ist und vorzugsweise ob dabei auch ordnungsgemäß verfahren worden ist. Eine weitere Aufgabe besteht darin, ein Preßfitting so auszubilden, daß damit eines der Verfahren durchgeführt werden kann.

Der erste Teil der Aufgabe wird erfindungsgemäß durch ein Verfahren gelöst, bei dem ein Rohr bereitgestellt wird, auf dem in einem Bereich, der nach der Verpressung von außen erkennbar ist, eine lokal begrenzte, zusätzliche Beschichtung aufgebracht ist, die derart ausgebildet ist, daß sie bei oder nach der Verpressung nicht der mechanischen Preßverbindung dient, und daß das Aussehen der Beschichtung durch das Preßgerät während des oder nach dem Preßvorgang visuell verändert wird. Grundgedanke der Erfindung ist es also, eine Beschichtung vorzusehen, die von dem für die Verpressung zu verwendenden Preßgerät beaufschlagt wird und hierdurch ihr Aussehen in Form, Farbe und/oder Struktur so ändert, daß ein Kontrolleur ohne weiteres sehen kann, ob an der fraglichen Stelle eine Verpressung durchgeführt worden ist oder nicht. Der Vorteil dieses Verfahrens liegt darin, daß hierfür keine aufwendigen Maßnahmen durchgeführt werden müssen, sondern daß lediglich ein Preßfitting und/oder Rohr bereitgestellt werden muß, das mit einer auf das Preßgerät reagierenden Beschichtung versehen ist.

In besonderer Ausführung der Erfindung ist vorgesehen, daß die Beschichtung auf dem Rohr so angeordnet und ausgebildet wird, daß ihr Aussehen unter Einwirkung des Preßgeräts nur dann verändert wird, wenn das Rohr um die Einschubtiefe in das Preßfitting eingeschoben wird. Hierdurch werden dem Kontrolleur zweierlei Informationen gegeben, wenn er feststellt, daß die Beschichtung ihr Aussehen verändert hat. Zum einen weiß er dann, daß eine Verpressung überhaupt vorgenommen worden ist. Zum anderen kann er feststellen, daß das Rohr um die Einschubtiefe, d.h. ausreichend weit in das Preßfitting eingeschoben worden ist. Liegt kein verändertes Aussehen der Beschichtung vor, ist die Rohrverbindung nicht ordnungsgemäß hergestellt.

Der erste Teil der Aufgabe wird erfindungsgemäß auch durch ein zweites verfahren gelöst, bei dem ein Preßfitting bereitgestellt wird, auf dem in einem Bereich, der nach der Verpressung von außen erkennbar ist, eine Beschichtung in Form eines Farbauftrags, einer Farbfolie oder eines Farbrings in einer Farbe aufgebracht ist, die sich deutlich von der des Preßfittings unterscheidet, und bei dem das Aussehen der Beschichtung durch das Preßgerät während des oder nach dem Preßvorgang visuell verändert wird. Im Unterschied zu dem ersten Verfahren ist also hier das Preßfitting mit einer Beschichtung versehen, die den Preßvorgang erkennbar macht. Dicke und Breite der Beschichtung sind so an das erfindungsgemäße Verfahren angepaßt, daß eine das Aussehen der Beschichtung verändernde Einwirkung des Preßgerätes während oder nach dem Preßvorgang gesichert ist.

Der zweite Teil der Aufgabe wird erfindungsgemäß durch ein Preßfitting gelöst, auf das eine visuell erkennbare Beschichtung in Form eines Farbauftrags, einer Farbfolie oder eines Farbrings in einem Bereich aufgebracht ist, der bestimmungsgemäß für eine Verpreßung vorgesehen ist und nach der Verpreßung von außen erkennbar ist, und daß diese Beschichtung eine Farbe hat, die sich deutlich von der des Preßfittings unterscheidet, und daß die Beschichtung durch den Pressvorgang visuell veränderbar ist.

In einer möglichen Ausführungsform wird die Beschichtung so ausgebildet und angeordnet, daß sie ihr Aussehen aufgrund Druckeinwirkung des Preßgeräts ändert. Da das Preßgerät beim Verpressen auf das Preßfitting und das Rohr hohe Drücke ausübt, damit es zu einer plastischen Verformung kommt, reicht es in der Regel aus, daß die Beschichtung in einem Bereich angeordnet wird, wo die Druckausübung des Preßgeräts stattfindet, also insbesondere auf der Preßfläche. Vor allem bei dünnen Beschichtungen ist dann in der Regel gesichert, daß beim Verpressen deutliche Druckspuren eingeprägt werden, indem die Beschichtung eingedrückt und/oder beschädigt wird. Bei dickeren Beschichtungen kommt es zu deutlich sichtbaren Einprägungen, wobei das Material so weich sein sollte, daß es die Verpressung nicht behindert.

Sofern die Farbbeschichtung dünn genug ist, wird sie beim verpressen durch das Preßgerät derart beschädigt, daß die Farbe des Untergrunds, also des Preßfittings oder des Rohrs, deutlich sichtbar wird. Dabei ist es nicht zwingend, daß die Farbbeschichtung direkt von dem Preßgerät beaufschlagt wird. Sofern die Farbbeschichtung ausreichend spröde ausgebildet ist, kann sie auch neben dem Preßbereich aufgetragen werden, denn sie platzt dann durch die plastische Verformung des Preßfittings bzw. Rohrs zumindest teilweise ab.

Der Farbauftrag kann beispielsweise auch aus zumindest zwei Farbschichten unterschiedlicher Farben hergestellt werden. Auf diese Weise kann die äußere Farbschicht die gleiche Farbe haben wie das Preßfitting und/oder das Rohr, denn beim Verpressen tritt infolge Beschädigung der äußeren Farbschicht die innenliegende, andersfarbige Farbschicht hervor und zeigt dann einen Verpreßvorgang an. Hierzu ist es zweckmäßig, daß die äußere Farbschicht dünner ausgebildet wird als die innere. Dabei kann eine der Farbschichten aus einem Metall hergestellt werden und die andere Farbschicht dazu kontrastieren, da hierdurch ein kräftiger Kontrast hergestellt werden kann.

Für die Durchführung des vorbeschriebenen Verfahrens ist eine Anpassung der vorhandenen Preßgeräte nicht erforderlich, sofern die Beschichtung so angeordnet wird, daß der von dem Preßgerät ausgeübte Druck beim verpressen zu einer erkennbaren Veränderung der Beschichtung führt. Es kann jedoch auch vorgesehen sein, daß das Preßgerät mit einer Markiereinrichtung versehen wird, mittels der beim oder nach dem verpressen eine Markierung - welche auch immer - auf die Beschichtung aufgebracht wird, die für einen Kontrolleur erkennbar ist. Dies kann zum Beispiel in der Weise geschehen, daß die Markiereinrichtung als separates Druckorgan ausgebildet wird, das eine Druckmarkierung beispielsweise in Form einer Prägung oder eines Aufdrucks erzeugt. Statt dessen kann die Markiereinrichtung auch als Erhebungen in den Preßflächen des Preßwerkzeuges ausgebildet werden, die beim Preßvorgang eine Druckmarkierung erzeugen. In beiden Fällen besteht die Möglichkeit, die Beschichtung gezielt und definiert mit einer Markierung zu versehen, die ein bestimmtes, immer wiederkehrendes Aussehen hat. In Kombination mit der Beschichtung kann eine Druckmarkierung verwirklicht werden, die wesentlich besser erkennbar ist als die Einprägung eines Prägezeichens in das Preßfitting selbst, wie dies aus der DE-U-297 06 408 bekannt ist.

Die Markiereinrichtung kann alternativ dazu eine Einrichtung zur Erzeugung eines Energiestrahls, beispielsweise eines Laserstrahls oder eines Funkenerosionsstrahls, aufweisen, mit dem auf der Beschichtung eine Markierung beispielsweise in Form einer Einbrennmarkierung erzeugt wird. Gleiches kann mit einer als Heizstempel ausgebildeten Markiereinrichtung erzielt werden. Auch in diesem Fall sind in Kombination mit der Beschichtung deutlich erkennbare Kontraste herstellbar.

Eine weitere Alternative besteht darin, die Markiereinrichtung als Farbmarkiereinrichtung auszubilden, welche eine zu der Farbe der Beschichtung kontrastierende Farbmarkierung erzeugt. Auch in diesem Falle zeichnet sich das erfindungsgemäße Verfahren durch eine leicht erkennbare Veränderung der Beschichtung aus. Dabei ist es nicht von Nachteil, wenn die Farbmarkierung die Beschichtung vollständig abdeckt.

In der Zeichnung ist die Erfindung anhand von Ausführungsbeispielen näher veranschaulicht. Es zeigen:
- Figur 1: einen Längsschnitt durch eine Rohrverbindung mit ausreichend eingeschobenen Rohrenden;
- Figur 2: einen Längsschnitt durch eine Rohrverbindung mit einem nicht ausreichend eingeschobenen Rohr und
- Figur 3: einen Längsschnitt durch die Rohrverbindung gemäß Figur 2 mit angesetzten Preßwerkzeugen.

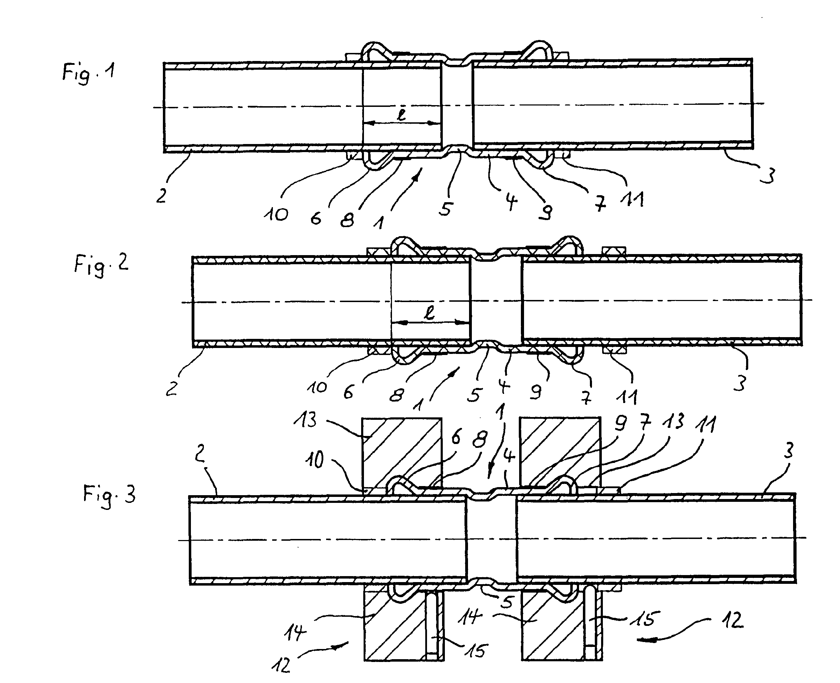

Die in Figur 1 dargestellte Rohrverbindung besteht aus einem Preßfitting 1 und zwei stirnseitig gegenüberstehenden, nur teilweise dargestellten Rohren 2, 3, die in das Preßfitting 1 von der einen bzw. anderen Seite her eingeschoben sind. Das Preßfitting 1 hat einen Zylinderabschnitt 4 mit einer als Anschlag für die Rohre 2, 3 dienenden, mittig liegenden Einschnürung 5. An den freien Enden weist das Preßfitting 1 nach außen gewölbte Ringwülste 6, 7 auf, in die innenseitig jeweils ein elastomerer Dichtring eingelegt ist, auf dessen Darstellung hier jedoch verzichtet worden ist. Beide Rohre 2, 3 sind um die vorgesehene Einschubtiefe 1 eingeschoben und liegen deshalb an der Einschnürung 5 an.

Das Preßfitting 1 weist unmittelbar neben den Ringwülsten 6, 7 ringförmige Beschichtungen 8, 9 auf. Diese Beschichtungen 8, 9 werden von dem Preßgerät beim Verpressen des Preßfittings 1 radial nach innen beaufschlagt. Die Beschichtungen 8, 9 sind so ausgebildet, daß sie ihr Aussehen aufgrund der starken Druckeinwirkung des Preßgerätes während der Verpressung ändern, beispielsweise eingeprägt werden oder soweit zerstört werden, daß das Material des Preßfittings 1 zum Vorschein kommt. Auch die anderen, oben beschriebenen Ausführungsformen und Wirkungsmechanismen von Beschichtungen kommen in Frage. In allen Fällen signalisiert die Veränderung der Beschichtungen 8, 9, daß eine Verpressung vorgenommen worden ist.

Die Rohre 2, 3 weisen Kunststoffringe 10, 11 auf, die die Rohre 2, 3 festsitzend umgeben und jenseits der Bereiche der Einschubtiefe 1, jedoch an diese angrenzend angeordnet sind. Dadurch, daß die Kunststoffringe 10, 11 an den Stirnseiten der Ringwülste 6, 7 anliegen, ist von außen erkennbar, daß die Rohre 2, 3 ausreichend weit in das Preßfitting 1 eingeschoben sind. Die Kunststoffringe 10, 11 sind so dick ausgebildet, daß auch sie beim Verpressen von dem Preßgerät erfaßt werden, so daß sie ihr Aussehen während der Verpressung verändern, beispielsweise Druckmarkierungen erhalten oder dergleichen. Auf diese Weise erhält der Kontrolleur zusätzlich die Sicherheit, daß die Rohre 2, 3 schon vor dem Preßvorgang ausreichend weit eingeschoben waren.

In Figur 2 ist die gleiche Rohrverbindung dargestellt, so daß für die gleichen Teile die gleichen Bezugsziffern verwendet worden sind wie bei der Ausführungsform gemäß Figur 1 und auf die Beschreibung dieser Ausführungsform Bezug genommen wird. Der einzige Unterschied besteht darin, daß das rechte Rohr 3 nicht weit genug, d.h. nicht um die Einschubtiefe 1, in des Preßfitting 1 eingeschoben ist. Dies wird dadurch von außen erkennbar, daß der auf diesem Rohr 3 sitzende Kunststoffring 11 deutlichen Abstand zu der Stirnseite des benachbarten Ringwulstes 7 hat. Ein Kontrolleur kann zwar durch Veränderung des Aussehens der Beschichtungen 8, 9 sehen, daß Verpressungen stattgefunden haben. Aufgrund des Abstandes zwischen Kunststoffring 11 und Ringwulst 7 erkennt er jedoch, daß die Verpressung nicht ordnungsgemäß ist, weil das rechte Rohr 3 nicht ausreichend weit in das Preßfitting 1 eingeschoben war und deshalb die Gefahr einer Leckage droht.

Figur 3 zeigt die in Figur 2 dargestellte Rohrverbindung mit angesetztem Preßwerkzeug 12. Es versteht sich, daß das Preßwerkzeug 12 nicht gleichzeitig an beiden Enden des Preßfittings 1 angesetzt sein kann. Vielmehr werden die Verpressungen nacheinander durchgeführt.

Das Preßwerkzeug 12 hat in an sich bekannter Weise (vgl. zum Beispiel DE-A-196 31 019 und den darin zitierten Stand der Technik) eine obere und eine untere Preßbacke 13, 14, die Teil eines hier nicht näher dargestellten Preßgerätes sind und die mit Hilfe eines zu diesem Preßgerät gehörenden Antriebs zum Zwecke der radialen Komprimierung des Preßfittings 1 und der Rohre 2, 3 gegeneinander bewegt werden können. Es ist erkennbar, daß die Preßbacken 13, 14 bei der Verpressung des linksseitigen Teils des Preßfittings 1 mit dem Ringwulst 6 sowohl die Beschichtung 8 als auch den Kunststoffring 10 beaufschlagen. Beim Zusammenführen der Preßbacken 13, 14 werden deshalb auch diese druckbeaufschlagt und erleiden hierdurch eine nachträglich visuell erkennbare Veränderung ihres Aussehens. Die Veränderung ist abhängig von der Art der Beschichtung 8 bzw. des Kunststoffrings 10. Insoweit wird auf die vorstehende, allgemeine Beschreibung verwiesen.

Die untere Preßbacke 14 ist mit einem Tastsensor 15 versehen, der beispielsweise mittels Federvorspannung radial nach innen gedrückt wird. Bei der linksseitigen Verpressung liegt er an der Beschichtung 8 an und nimmt dabei eine Stellung ein, in der er kein Aufmerksamkeitszeichen erzeugt und/oder auch nicht den Antrieb blockiert. Es versteht sich, daß seine Stellung von einer entsprechenden Schalteinrichtung erfaßt und an eine Steuereinrichtung weitergegeben wird, die die Erzeugung eines Aufmerksamkeitszeichens und/oder die Freigabe bzw. Sperrung des Antriebs steuert.

Bei der rechtsseitigen Verpressung faßt der Tastsensor 15 in die Lücke zwischen dem Ringwulst 7 und dem Kunststoffring 11 und kommt dadurch radial weiter nach innen zu liegen. In dieser Stellung wird die Steuereinrichtung so angesteuert, daß ein z.B. optisches oder akustisches Aufmerksamkeitszeichen durch das Preßgerät erzeugt und/oder der Antrieb gesperrt wird, so daß der Preßvorgang nicht durchgeführt werden kann.

Es versteht sich, daß - was hier nicht näher dargestellt ist - auch die obere Preßbacke 13 einen Tastsensor aufweist, der in der linken Verpreßstellung an den Kunststoffring 10 anliegt. Sollte dieser Kunststoffring 10 einen Abstand zum Ringwulst 6 haben, fährt dieser Tastsensor in die Lücke zwischen beiden ein und erzeugt die oben genannten Warn- bzw. Sperrmaßnahmen. In der rechtsseitigen Preßstellung liegt dieser Tastsensor dann an der Beschichtung 9 an.

## Patentansprüche

1. Verfahren zur Verbindung eines Preßfittings (1) mit einem Rohr (2, 3) mittels eines Preßgeräts (12), bei dem Preßfitting (1) und Rohr (2, 3) um eine bestimmte Einschubtiefe (1) ineinandergesteckt und dann das Preßfitting (1) und/oder das Rohr (2, 3) mit Hilfe des Preßgeräts (12) derart radial nach innen plastisch verformt wird bzw. werden, daß sich zwischen ihnen eine Preßverbindung ergibt, **dadurch gekennzeichnet, daß** das Rohr (2, 3) bereitgestellt wird, auf dem in einem Bereich, der nach der Verpressung von außen erkennbar ist, eine lokal begrenzte zusätzliche Beschichtung (10, 11) aufgebracht ist, die derart ausgebildet ist, daß sie bei und nach der Verpressung nicht der mechanische Preßverbindung des Rohres mit dem Preßfitting dient, und daß das Aussehen der Beschichtung (10, 11) durch das Preßgerät (12) während des oder nach dem Preßvorgang visuell verändert wird.

2. Verfahren nach Anspruch 1, **dadurch gekennzeichnet, daß** die Beschichtung (10, 11) auf dem Rohr (2, 3) so angeordnet und ausgebildet ist, daß ihr Aussehen unter der Einwirkung des Preßgeräts nur dann verändert wird, wenn das Rohr (2, 3) um die vorgesehene Einschubtiefe (1) in das Preßfitting (1) eingeschoben worden ist.

3. Verfahren zum Verbinden eines Preßfittings (1) mit einem Rohr (2, 3) mittels eines Preßgeräts (12), bei dem Preßfitting (1) und Rohr (2, 3) um eine bestimmte Einschubtiefe (1) ineinandergesteckt und dann Preßfitting (1) und/oder das Rohr (2, 3) mit Hilfe des Preßgeräts (12) derart radial nach innen plastisch verformt wird bzw. werden, daß sich zwischen ihnen eine Preßverbindung ergibt, **dadurch gekennzeichnet, daß** ein Preßfitting (1) bereitgestellt wird, auf dem in einem Bereich, der nach der Verpressung von außen erkennbar ist, eine Beschichtung (8, 9) in Form eines Farbauftrags, einer Farbfolie oder eines Farbrings in einer Farbe aufgebracht ist, die sich deutlich von der des Preßfittings (1) unterscheidet, und daß das Aussehen der Beschichtung (8, 9) durch das Preßgerät (12) während des oder nach dem Preßvorgang visuell verändert wird.

4. Preßfitting für die Durchführung des Verfahrens nach Anspruch 3, **dadurch gekennzeichnet, daß** auf das Preßfitting (1) eine visuell erkennbare Beschichtung (8, 9) in Form eines Farbauftrags, einer Farbfolie oder eines Farbrings in einem Bereich aufgebracht ist, der bestimmungsgemäß für eine Verpressung vorgesehen ist und nach der Verpressung von außen erkennbar ist, und daß diese Beschichtung (8, 9) eine Farbe hat, die sich deutlich von der des Preßfittings (1) unterscheidet, und daß die Beschichtung (8, 9) durch den Preßvorgang visuell veränderbar ist.

5. Preßfitting nach Anspruch 4, **dadurch gekennzeichnet, daß** die Beschichtung (8, 9) so ausgebildet ist, daß sie ihr Aussehen aufgrund Druckeinwirkung des Preßgeräts ändert.

6. Preßfitting nach Anspruch 4 oder 5, **dadurch gekennzeichnet, daß** der Farbauftrag (8, 9) zumindest zwei Farbschichten unterschiedlicher Farben aufweist.

7. Preßfitting nach Anspruch 6, **dadurch gekennzeichnet, daß** die äußere Farbschicht dünner ausgebildet ist als die innere(n) Farbschicht(en).

8. Preßfitting nach Anspruch 6 oder 7, **dadurch gekennzeichnet, daß** eine der Farbschichten aus einem Metall besteht und die andere Farbschicht dazu kontrastiert.

9. Preßfitting nach einem der Ansprüche 6 bis 8, **dadurch gekennzeichnet, daß** die Farbbeschichtung (8, 9) so ausgebildet ist, daß sich unter Druckeinwirkung zwei Farben unter Ausbildung einer dritten Farbe vermischen.

## Claims

1. Method for joining a press fitting (1) and a pipe (2, 3) by means of a pressing device (12), in which the press fitting (1) and the pipe (2, 3) are pushed into each other up to a certain insertion depth (1) and then the press fitting (1) and/or the pipe (2, 3) is or are plastically deformed radially inwards using the pressing device (12) in such a way that there is a press connection between them, **characterised in that** the pipe (2, 3) is provided, on which in one area, which is identifiable from outside after pressing, a locally limited additional coating (10, 11) is applied, which is made in such a way that it is not used for the mechanical press connection of the pipe and the press fitting during and after pressing and that the appearance of the coating (10, 11) is changed visually by the pressing device (12) during or after the pressing process.

2. Method according to claim 1, **characterised in that** the coating (10, 11) on the pipe (2, 3) is arranged and made so that its appearance is only changed due to the effect of the pressing device if the pipe (2, 3) is pushed into the press fitting (1) up to the designated insertion depth (1).

3. Method for joining a press fitting (1) and a pipe (2, 3) by means of a pressing device (12), in which the press fitting (1) and the pipe (2, 3) are pushed into each other up to a certain insertion depth (1) and then the press fitting (1) and/or the pipe (2, 3) is or are plastically deformed radially inwards using the pressing device (12) in such a way that a press connection arises between them, **characterised in that** a press fitting (1) is provided, on which in one area, which is identifiable from outside after pressing, a coating (8, 9) in the form of a coloured layer, a coloured film or a coloured ring is applied in a colour, which is clearly different from that of the press fitting (1), and the appearance of the coating (8, 9) is changed visually by the pressing device (12) during or after the pressing process.

4. Press fitting for carrying out the method according to claim 3, **characterised in that** on the press fitting (1) a visually identifiable coating (8, 9) in the form of a coloured layer, a coloured film or a coloured ring is applied in an area, which is provided for pressing, and is recognisable from outside after pressing and that this coating (8, 9) has a colour, which is clearly different from that of the press fitting (1), and that the coating (8, 9) can be changed visually by the pressing process.

5. Press fitting according to claim 4, **characterised in that** the coating (8, 9) is made so that its appearance changes because of the effect of the pressure of the pressing device.

6. Press fitting according to claim 4 or 5, **characterised in that** the coloured layer (8, 9) has at least two coloured layers of different colours.

7. Press fitting according to claim 6, **characterised in that** the outer coloured layer is made thinner than the inner coloured layer(s).

8. Press fitting according to claim 6 or 7, **characterised in that** one of the coloured layers is made of metal and the other coloured layer contrasts with it.

9. Press fitting according to one of claims 6 to 8, **characterised in that** the coloured coating (8, 9) is made so that two colours are mixed to form a third colour due to the effect of pressure.

## Revendications

1. Procédé pour relier un raccord (1) à emmancher à la presse et un tuyau (2, 3) au moyen d'une presse (12), selon lequel le raccord (1) et le tuyau (2, 3) sont emboîtés l'un dans l'autre à une profondeur d'emmanchement déterminée (I), puis le raccord (1) et/ou le tuyau (2, 3) sont déformés plastiquement radialement vers l'intérieur, à l'aide de la presse (12), de telle sorte qu'on obtient entre eux un assemblage comprimé, **caractérisé en ce qu'**on met à disposition le tuyau (2, 3) sur lequel est appliqué, dans une zone pouvant être reconnue de l'extérieur après la compression, un revêtement supplémentaire (10, 11) localement limité qui est conçu de telle sorte qu'il ne sert pas, lors de la compression et après celle-ci, à l'assemblage comprimé mécanique du tuyau et du raccord, et **en ce que** l'aspect extérieur du revêtement (10, 11) est modifié visuellement par la presse (12) pendant ou après la compression.

2. Procédé selon la revendication 1, **caractérisé en ce que** le revêtement (10, 11) est disposé et configuré sur le tuyau (2, 3) de telle sorte que son aspect extérieur n'est modifié sous l'action de la presse que si le tuyau (2, 3) a été enfoncé dans le raccord (1) à la profondeur d'emmanchement prévue (I)

3. Procédé pour relier un raccord (1) à emmancher à la presse et un tuyau (2, 3) au moyen d'une presse (12), selon lequel le raccord (1) et le tuyau (2, 3) sont emboîtés l'un dans l'autre à une profondeur d'emmanchement déterminée (I), puis le raccord (1) et/ou le tuyau (2, 3) sont déformés plastiquement radialement vers l'intérieur, à l'aide de la presse (12), de telle sorte qu'on obtient entre eux un assemblage comprimé, **caractérisé en ce qu'**on met à disposition un raccord (1) sur lequel est appliqué, dans une zone pouvant être reconnue de l'extérieur après la compression, un revêtement (8, 9) sous la forme d'une peinture, d'une feuille colorée ou d'une bague colorée, dans une couleur qui se différencie nettement de celle du raccord (1), et **en ce que** l'aspect extérieur du revêtement (8, 9) est modifié visuellement par la presse (12) pendant ou après la compression.

4. Raccord à emmancher à la presse pour la mise en oeuvre du procédé selon la revendication 3, **caractérisé en ce qu'**un revêtement (8, 9) visuellement reconnaissable, sous la forme d'une peinture, d'une feuille colorée ou d'une bague colorée, est appliqué sur le raccord (1) dans une zone qui est prévue conformément aux prescriptions pour une compression et qui est reconnaissable de l'extérieur après la compression, et **en ce que** ce revêtement (8, 9) possède une couleur qui se différencie nettement de celle du raccord (1), et **en ce que** le revêtement (8, 9) peut être modifié visuellement par la compression.

5. Raccord à emmancher à la presse selon la revendication 4, **caractérisé en ce que** le revêtement (8, 9) est conçu de telle sorte qu'il modifie son aspect extérieur en raison de l'action de pression de la presse.

6. Raccord à emmancher à la presse selon la revendication 4 ou 5, **caractérisé en ce que** la peinture (8, 9) présente au moins deux couches de peinture de couleurs différentes.

7. Raccord à emmancher à la presse selon la revendication 6, **caractérisé en ce que** la couche de peinture extérieure est réalisée plus mince que la ou les couches de peinture intérieures.

8. Raccord à emmancher à la presse selon la revendication 6 ou 7, **caractérisé en ce qu'**une des couches de peinture est constituée d'un métal, et l'autre couche de peinture est contrastée par rapport à la précédente.

9. Raccord à emmancher à la presse selon l'une des revendications 6 à 8, **caractérisé en ce que** la peinture de revêtement (8, 9) est conçue de telle sorte que, sous l'action de la pression, deux couleurs se mélangent en formant une troisième couleur.
